# EUROPÄISCHE PATENTSCHRIFT

(11) **EP 2 241 283 B1**
(45) Veröffentlichungstag und Bekanntmachung des Hinweises auf die Patenterteilung: **27.08.2014**
(21) Anmeldenummer: 10007774.2
(22) Anmeldetag: 22.11.2002
(51) Int. Cl.: A61C 17/34, A46B 9/04, A61C 17/22

(54) **Zahnbürstenkopf für eine elektrische Zahnbürste**
Toothbrush head for an electric toothbrush
Tête de brosse à dents électrique

(30) Priorität: 02.03.2002 DE 10209320
(43) Veröffentlichungstag der Anmeldung: 20.10.2010
(62) Teilanmeldung aus: 02783089.2
(73) Patentinhaber: Braun GmbH, 61476 Kronberg/Taunus (DE)
(72) Erfinder: Driesen, Georges, 61276 Weilrod (DE); Fritsch, Thomas, 65817 Eppstein (DE); Harms, Michael, 61440 Oberursel (DE); Hilfinger, Peter, 61350 Bad Homburg (DE); Lieberwirth, Lars, 61479 Glashütten (DE); Schwarz-Hartmann, Armin, 55234 Wendelsheim (DE)

(56) Entgegenhaltungen:
- EP-A2- 1 138 222
- DE-U1- 8 807 968
- DE-U1- 29 823 799

## Beschreibung

Die vorliegende Erfindung betrifft einen Zahnbürstenkopf für eine elektrische Zahnbürste gemäß Anspruch 1.

Zahnbürstenköpfe von elektrischen Zahnbürsten sind bislang auch hinsichtlich ihrer Putzwirkung immer noch verbesserungsfähig. Bei Handzahnbürsten wurde es bereits bekannt (vgl. z.B. DE 29823799 U1) Borstenbüschel mit unterschiedlichen Querschnitten und in unterschiedlicher Neigung anzuordnen, um besser in die Zahnzwischenräume einzudringen. Bei elektrisch angetriebenen Zahnbürsten bzw. angetriebenen Borstenfeldern wird weist von solchen geneigten Bürstenbüscheln Abstand genommen. Hinsichtlich der Drehachse von rotatorisch oszillierenden oder rotierenden Borstenfeldern wurden die Borstenbüschel bisher weist parallel zur Drehachse ausgerichtet, so dass sich die Ausrichtung bei der Drehbewegung nicht ändert. Um eine verbesserte Reinigungswirkung zu erreichen, wurde bereits vorgeschlagen, ein rotatorisch oszillierendes Borstenfeld mit einem feststehendem Borstenfeld zu kombinieren. Dabei wurde den Borstenfeldern jeweils eine schalenförmige Arbeitsfläche gegeben, d.h. die am äußeren Rand liegenden Borstenbüschel waren länger als die im Inneren liegenden Borstenbüschel. Gerade diese Maßnahme verhinderte einen optimalen Kontakt zur Zahnoberfläche. Zudem führt die Anordnung eines feststehenden Borstenfeldes neben dem sich bewegenden Borstenfeld oftmals dazu, dass der Benutzer die Zahnbürste wie eine Handzahnbürste benutzt und nach Schuhputzmanier hin- und herfährt. Hierdurch wird jedoch die Putzwirkung des rotierenden Borstenfeldes beeinträchtigt.

Elektrische Zahnbürsten mit geneigten Borstenbüscheln sind beispielsweise aus den Dokumenten EP-A-1 138 222 und DE-U-8 807 968 bekannt.

Der vorliegenden Erfindung liegt daher die Aufgabe zugrunde, einen verbesserten Zahnbürstenkopf einer elektrischen Zahnbürste zu schaffen, der die Nachteile des Standes der Technik vermeidet und letzteren in vorteilhafter Weise weiterbildet. Vorzugsweise soll eine weiter verbesserte Putzwirkung erreicht werden.

Diese Aufgabe wird erfindungsgemäß durch einen Zahnbürstenkopf gemäß Patentanspruch 1 gelöst. Bevorzugte Ausgestaltungen der Erfindung sind Gegenstand der Unteransprüche.

Es ist dabei erfindungsgemäß vorgesehen, dass an dem motorisch antreibbaren Borstenträger mehrere Gruppen von Borstenbüschel befestigt sind, die in verschiedenen Richtungen geneigt angeordnet sind. Die in verschiedene Richtungen geneigten Gruppen von Borstenbüschel können verschiedene Querschnitte, vorzugsweise auch von der Kreisform abweichende Querschnitte besitzen, um besser in Zahnzwischenräume eindringen zu können und Plaque effektiv zu beseitigen.

Vorzugsweise ist neben dem beweglichen Borstenträger ein unbeweglicher Borstenträger am Zahnbürstenkopf befestigt, wobei an dem unbeweglichen Borstenträger ebenfalls mehrere Gruppen von Borstenbüschel befestigt sind, die in verschiedene Richtungen geneigt angeordnet sind. Die in verschiedene Richtungen geneigten Gruppen von Borstenbüschel können vorzugsweise unterschiedlich Querschnitte, insbesondere von der Kreisform abweichende Querschnitte besitzen. Die Borstenbüschel des feststehenden Borstenfeldes sind vorzugsweise in andere Richtungen geneigt als die Borstenbüschel des angetriebenen Borstenfeldes.

An dem angetriebenen, vorzugsweise rotatorisch oszillierendem Borstenträger sind zur Bewegungsachse des Borstenträgers geneigte und gegebenenfalls parallele Bürstenbüschel vorgesehen, die einen länglichen, ovalen bzw. rechteckigen Querschnitt besitzen. Bürstenbüschel solchen Querschnitts sind vorzugsweise auch an dem unbeweglichen Borstenträger vorgesehen, um eine effektivere Putzwirkung zu erreichen.

In Weiterführung der Erfindung sind an dem beweglichen Borstenträger und/oder an dem unbeweglichen Borstenträger Borstenbüschel vorgesehen, deren freie Arbeitsenden sich in verschiedenen Höhen über dem Borstenträger erstrecken. Die Borstenbüschel können verschiedene Längen haben. Insbesondere können Borstenbüschel verschiedenen Querschnitts verschiedene Längen besitzen. An dem feststehenden Borstenfeld ist es zweckmäßig, die am äußeren Rand angeordneten Borstenbüschel je nach Querschnittsfläche mit verschiedener Länge auszubilden. Bevorzugt besitzen die Borstenbüschel mit dünnerem Querschnitt eine größere Länge als die Borstenbüschel mit größerer Querschnittsfläche. Auch können Borstenbüschel mit kreisförmigem Querschnitt kürzer ausgebildet sein als Borstenbüschel mit ovalem bzw. länglichem Querschnitt.

An dem angetriebenen Borstenfeld ist es zweckmäßig längere Borstenbüschel in Randabschnitten vorzusehen, die in einer neutralen Drehstellung dieses Borstenfeldes etwa im Bereich der Längsmittelebene der Zahnbürste liegen, während kürzere Borstenbüschel im mittleren Abschnitt des Borstenfeldes sowie in Randabschnitten, die rechts und links der Längsmittelebene der Zahnbürste liegen, angeordnet werden. Die längeren Borstenbüschel des angetriebenen Borstenfeldes haben vorzugsweise einen länglichen bzw. ovalen Querschnitt. Sie können zur Oberfläche des Borstenträgers geneigt angeordnet sein, und zwar vorzugsweise in einem spitzen Winkel in Umfangsrichtung um die Drehachse des Borstenfeldes.

Um optimale Reinigungsergebnisse zu erreichen, sind auf dem bewegten Borstenträger Borstenbüschel in einer Vielzahl verschiedener Neigungsrichtungen vorgesehen. Eine erste Gruppe von Borstenbüscheln am beweglichen Borstenträger mit etwa kreisrundem Querschnitt kann sich parallel zur Bewegungsachse des Borstenträgers erstrecken, wobei die Borstenbüschel dieser Gruppe vorzugsweise etwa zentrisch auf dem Borstenträger angeordnet sind. Eine zweite Gruppe von Borstenbüscheln am beweglichen Borstenträger mit vorzugsweise länglichem, insbesondere ovalem Querschnitt kann sich ebenfalls parallel zur Bewegungsachse des Borstenträgers erstrecken, wobei diese Borstenbüschel vorzugsweise neben den zuvor genannten Borstenbüscheln mit rundem Querschnitt angeordnet sind, und zwar in Längsrichtung der Zahnbürste vor und hinter den Borstenbüscheln der ersten Gruppe. Die Längsachse des ovalen Querschnitts der Borstenbüschel der zweiten Gruppe erstreckt sich vorzugsweise quer zur Längsrichtung der Zahnbürste.

Gemäß Erfindung sind auf dem bewegbaren Borstenträger Borstenbüschel vorgesehen, die sich in einem spitzen Winkel zur Bewegungsachse geneigt radial nach außen erstrecken. Eine dritte Gruppe von Borstenbüscheln mit länglichem, vorzugsweise ovalem Querschnitt erstreckt sich solchermaßen geneigt nach außen, wobei die Borstenbüschel in Längsrichtung der Zahnbürste rechts und links von den ungeneigten Borstenbüscheln der ersten und zweiten Gruppe angeordnet sein können, insbesondere etwa auf einer durch die Drehachse des Borstenträgers gehenden Querachse. Eine vierte Gruppe von Borstenbüscheln, die ebenfalls in der genannten Weise radial nach außen geneigt sind, kann runden Querschnitt besitzen und benachbart zu dem ungeneigten Borstenbüschel in der Mitte des Borstenträgers angeordnet sein. Vorzugsweise können sie sich paarweise diametral gegenüberliegen und noch innerhalb der äußersten Borstenbüschelreihe des bewegten Borstenträgers befinden.

Schließlich kann der Borstenträger einen radial außen liegenden Kranz von Borstenbüscheln besitzen, die in Umfangsrichtung um die Drehachse des Borstenträgers herum in einem spitzen Winkel geneigt sind. Vorzugsweise sind die solchermaßen geneigten Borstenbüschel paarweise gegensinnig geneigt angeordnet.

Eine fünfte Gruppe von Borstenbüscheln auf dem bewegten Borstenträger, die in der genannten Weise in Umfangsrichtung geneigt sind, können einen länglichen insbesondere ovalen Querschnitt besitzen. Sie sind vorzugsweise in einem Sektor des Borstenträgers angeordnet, der in einer unverdrehten Stellung des Borstenträgers auf der Längsmittelachse der Zahnbürste liegt. Sie liegen also in Längsrichtung der Zahnbürste etwa am vorderen und hinteren Ende des bewegten Borstenfeldes. Vorzugsweise besitzen diese Borstenbüschel eine größere Länge als alle übrigen Borstenbüschel des bewegten Borstenfeldes.

Schließlich kann eine sechste Gruppe von Borstenbüscheln, die in der genannten Weise in Umfangsrichtung um die Drehachse geneigt sind, an dem bewegten Borstenträger vorgesehen sein und einen etwa kreisförmigen Querschnitt besitzen. Sie legen zweckmäßigerweise etwa auf dem Umfangskreis der Borstenbüschel der fünften Gruppe, und zwar zwischen diesen.

Die Neigungswinkel der geneigten Borstenbüschel des angetriebenen Borstenträgers liegen vorzugsweise in einem Bereich von 4° bis 9°, insbesondere etwa 5,5° bis 7,5°.

Auch die Borstenbüschel auf dem unbeweglichen, starren Borstenfeld, das bevorzugt neben dem bewegbaren Borstenfeld zum Handteil der Zahnbürste hin angeordnet ist, sind in verschiedenen Neigungswinkeln geneigt angeordnet. Vorzugsweise sind für die Borstenbüschel des festen Borstenfeldes zwei Neigungswinkel vorgesehen, die in einer Ebene bzw. in parallelen Ebenen definiert sein und zueinander gegensinnig sein können. Insbesondere können bezogen auf die Längsrichtung der Zahnbürste nach vorne geneigte Borstenbüschel und nach hinten geneigte Borstenbüschel vorgesehen sein, die sich in einem jeweils spitzen Winkel von der Ebene des Borstenträgers erheben.

Die Neigungswinkel liegen vorzugsweise in einem Bereich von 10° bis 20°, insbesondere etwa 12° bis 15°. Vorzugsweise sind auf einer Mittelebene der Zahnbürste liegende Borstenbüschel zum Handteil hin geneigt, während außenliegende Borstenbüschel nach vorne zum bewegten Borstenfeld hin geneigt sein können.

In Weiterbildung der Erfindung haben nicht alle Borstenbüschel einer Neigungsrichtung denselben Querschnitt und/oder dieselbe Länge. In einem mittleren, auf der Längsmittelebene liegenden Bereich, können Borstenbüschel unterschiedlichen ovalen Querschnitts vorgesehen sein, wobei Borstenbüschel mit geringerer Querschnittsfläche eine größere Länge haben als Borstenbüschel mit größerer Querschnittsfläche. Dies hat den Hintergrund, dass die Borstenbüschel mit geringer Querschnittsfläche eine geringere Steifigkeit aufweisen und sich daher besser biegen lassen, so dass trotz ihrer größeren Länge die Borstenbüschel mit kürzerer Länge dennoch in Anlage an die Zahnflächen kommen.

In Randbereichen des festen Borstenfeldes rechts und links von der Längsmittelebene der Zahnbürste können Borstenbüschel mit ovalem Querschnitt und Borstenbüschel mit etwa kreisrundem Querschnitt vorgesehen sein, wobei die Borstenbüschel mit kreisrundem Querschnitt eine kürzere Länge haben als die Borstenbüschel mit ovalem Querschnitt. Vorzugsweise sind die kreisrunden Borstenbüschel und die ovalen Borstenbüschel alternierend angeordnet.

Nach einer bevorzugten Ausführung der Erfindung sind die auf dem festen Borstenfeld angeordneten Borstenbüschel etwa reihenförmig hintereinander angeordnet, und zwar in drei Reihen. Die mittlere Reihe kann nach hinten zum Handteil hin geneigt sein, während die beiden äußeren Reihen nach vorne zum bewegten Borstenfeld hin geneigt sind.

In Weiterbildung der Erfindung definieren die Borstenbüschel sowohl des festen Borstenfeldes als auch des angetriebenen, bewegten Borstenfeldes genau zwei Arbeitshöhen. Die freien Enden der längeren Borstenbüschel des festen Borstenfeldes und die freien Enden der längeren Borstenbüschel des bewegten Borstenfeldes liegen vorzugsweise in einer Ebene. Ebenso liegen die kürzeren Borstenbüschel des festen Borstenfeldes und die kürzeren Borstenbüschel des angetriebenen Borstenfeldes in einer zweiten Ebene, die unterhalb der ersten Ebene liegt.

Die Länge der Borstenbüschel nimmt auf dem festen Borstenfeld jedoch zum Handteil hin zu, obwohl die freien Enden der Borstenbüschel in der zuvor beschriebenen Weise in zwei Ebenen liegen. Dies hat den Hintergrund, dass der feste Borstenträger einen zum Handteil hin abfallenden Verlauf besitzt. Die näher am Handteil liegenden Borstenbüschel erhalten eine größere Länge und damit eine größere Biegsamkeit. Durch diese Struktur wird eine bessere Zugänglichkeit für die Zahnbürste bzw. ein besseres Putzergebnis beim Putzen der hinteren Zähne erreicht. Die Zahnbürste passt sich auch besser an den Zahnbogen der Frontzähne, sowohl innen als aussen, an. Der feste Borstenträger ist vorzugsweise dreidimensional geformt bzw. gewölbt. Die Wölbung kann sich auch quer zur Längsrichtung der Zahnbürste erstrecken. Quer zur Längsrichtung nimmt dadurch die Länge der Borsten zu.

Durch die Querwölbung des Borstenträgers wird eine mögliche Berührung des Kunststoffkörpers mit dem Zahnfleisch beim Zähneputzen im wesentlichen verhindert.

Vorzugsweise besitzt das feste Borstenfeld Borsten verschiedener Eigenschaften. In Weiterbildung der Erfindung können Borsten vom am Rand liegenden Borstenbüscheln einen größeren Durchmesser besitzen als Borsten von innen liegenden, zentralen Borstenbüscheln. Nach einer besonders vorteilhaften Ausführung besitzen die außen liegenden Borsten einen Durchmesser von etwa 0,18 ± 0,03 mm ((7±1) x 10⁻³ inch), während die inneren Borsten einen Durchmesser von etwa 0,15 ± 0,03 mm ((6±1) x 10⁻³ inch) besitzen. Die Borsten bestehen vorzugsweise aus Nylon.

In Weiterbildung der Erfindung sind die außen liegenden Borsten des festen Borstenfeldes verschleißanzeigend ausgebildet. Hierdurch kann eine übermäßige Abnutzung der Zahnbürste leicht erkannt werden.

In Weiterbildung der Erfindung besteht der Zahnbürstenkopf aus POM. Hierdurch wird es möglich, einen kompaktbauenden Zahnbürstenkopf zu schaffen, da die notwendige Wandstärke verringert werden kann. Bei aus ABS oder PP gefertigten Zahnbürstenköpfen ist es notwendig, die Verankerungslöcher für die runden Borstenbüschel etwa doppelt so tief auszuführen wie der Borstenbüscheldurchmesser. Für Borstenbüschelverankerungslöcher mit einem Durchmesser im Bereich von etwa 1,5 mm bis 1,7 mm ist eine minimale Wandstärke des Zahnbürstenkopfs von etwa 3,7 mm bis 4,1 mm notwendig, so dass ABS bzw. PP Zahnbürstenköpfe sperrig werden. Im Gegensatz hierzu kann durch die Verwendung von POM die notwendige Wandstärke beträchtlich verringert werden, bei dem angestellten Berechnungsbeispiel etwa um 0,6 mm bis 1,0 mm. Ein entsprechend kleinerer Zahnbürstenkopf erlaubt es, schwierig zugängliche Gebissbereiche besser zu erreichen und damit besser zu putzen.

Weiterer Vorteile, Anwendungsmöglichkeiten und vorteilhafte Merkmale der Erfindung ergeben sich aus der nachfolgenden Beschreibung eines Ausführungsbeispieles der Erfindung, die in den Figuren der Zeichnung dargestellt ist. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. In der Zeichnung zeigt:
- Figur 1: eine perspektivische Ansicht einer elektrischen Zahnbürste mit einem auf das Handteil der Zahnbürste aufsteckbaren Bürstenkopf mit einem rotatorisch ant- reibbaren Borstenfeld und einem feststehenden Borstenfeld gemäß einer bevor- zugten Ausführung der Erfindung,
- Figur 2: eine perspektivische, ausschnittsweise Explosionsdarstellung der Zahnbürste aus Figur 1, die den Zahnbürstenkopf in einer vom Handteil abgezogenen Stel- lung zeigt,
- Figur 3: eine ausschnittsweise Seitenansicht der Zahnbürste, die den Zahnbürstenkopf ähnlich Figur 2 in einem vom Handteil abgezogenen Zustand zeigt,
- Figur 4: einen ausschnittsweisen Längsschnitt durch die Zahnbürste aus den vorherge- henden Figuren, der den Zahnbürstenkopf auf das Handteil aufgesteckt zeigt,
- Figur 5: eine perspektivische, ausschnittsweise Darstellung des Zahnbürstenkopfs, die die Anordnung der Borstenbüschel der beiden Borstenfelder zeigt,
- Figur 6: eine Draufsicht auf die Borstenfelder des Zahnbürstenkopfs aus den vorherge- henden Figuren,
- Figur 7: einen Längsschnitt durch den Zahnbürstenkopf entlang der Linie A-A in Figur 6,

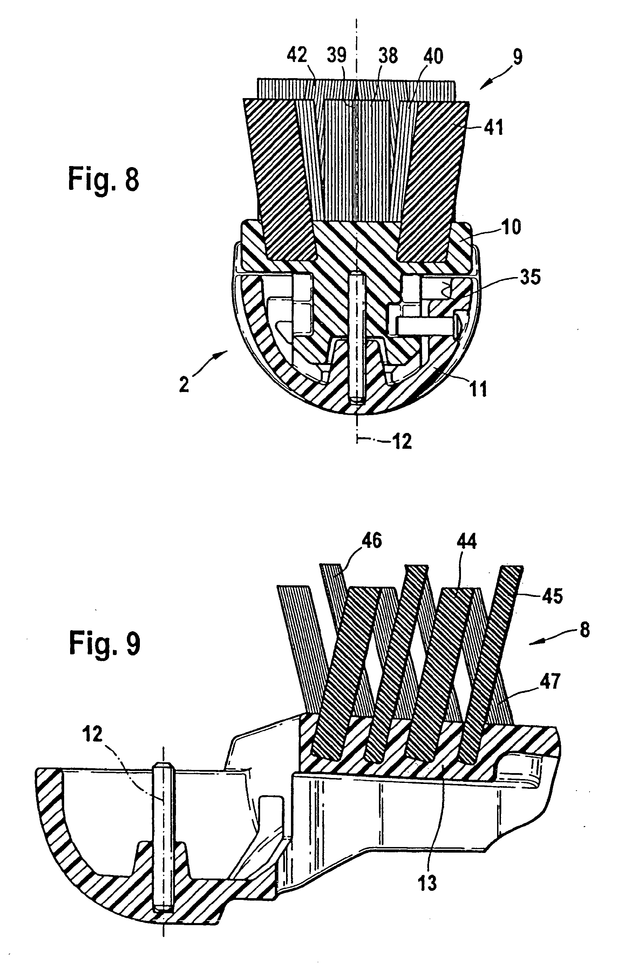

- Figur 8: einen Querschnitt durch den Zahnbürstenkopf aus den vorhergehenden Figuren im Bereich des rotatorisch angetriebenen Borstenfeldes entlang der Linie B-B in Figur 7, und
- Figur 9: einen ausschnittsweisen Längsschnitt durch den Zahnbürstenkopf ähnlich Figur 7, wobei der Zahnbürstenkopf ohne das rotatorisch antreibbare Borstenfeld dargestellt ist.

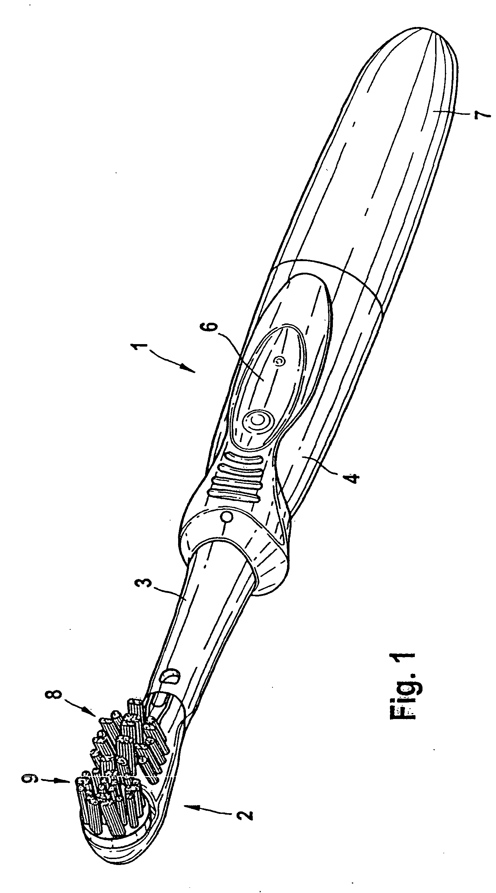

Die in Figur 1 gezeigte Zahnbürste umfasst einen Handteil 1 sowie einen Zahnbürstenkopf 2, der auf einem Bürstenrohr 3 sitzt, das ein stirnseitiges Ende des Handteils 1 bildet bzw. damit verbunden ist. Der Handteil 1 wird von einem Zahnbürstengehäuse 4 gebildet, in dem axial hintereinander ein Batterieaufnahmefach und ein Antriebsmotor 5 angeordnet sind. Mittels eines Schalters 6 auf der Mantelfläche des Gehäuses 4 kann der Motor 5 ein- und ausgeschaltet werden. Das Gehäuse 4 ist im Bereicht des Handteils 1 zweiteilig ausgebildet und eine Gehäusekappe 7 kann von einem den Motor aufnehmenden Gehäuseabschnitt abgeschraubt werden.

Der Bürstenkopf 2 besitzt zwei Borstenfelder, nämlich ein feststehendes Borstenfeld 8 sowie ein unmittelbar am Kopfende liegendes, antreibbares Borstenfeld 9, das um eine quer zur Zahnbürstenlängsachse verlaufende Drehachse rotatorisch oszillierend angetrieben werden kann.

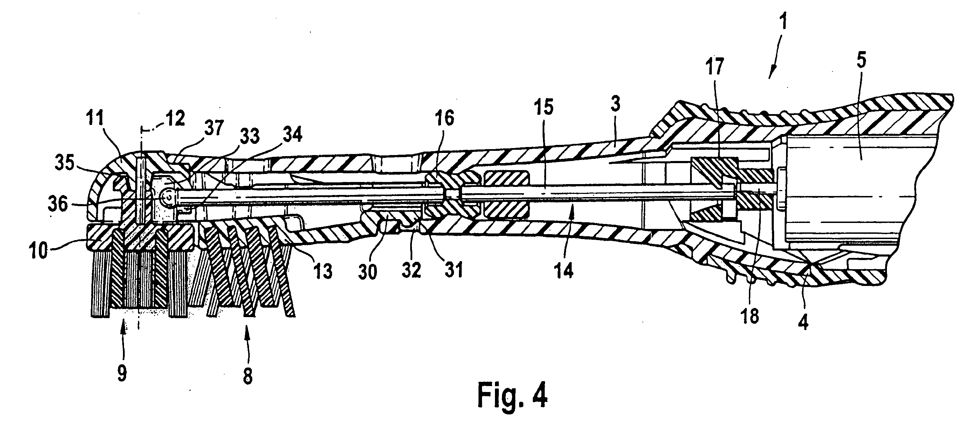

Wie Figur 4 zeigt, wird das antreibbare Borstenfeld 9 von einem Borstenträger 10 getragen, der zum Borstenfeld hin etwa kreisplattenförmig ausgebildet ist und an einem Bürstenkopfträger 11 befestigt ist. Wie Figur 4 zeigt, sitzt der Borstenträger 10 drehbar auf einer im Bürstenkopfträger 11 verankerten Drehachse 12.

Das feststehende Borstenfeld 8 wird von einem starr mit dem Bürstenkopfträger 11 verbundenen Borstenträger 13 getragen, der vorzugsweise unmittelbar Teil des Bürstenkopfträgers 11 bzw. daran integral angeformt sein kann.

Der bewegliche Borstenträger 10 wird vom Motor 5 her mittels eines Übertragers 14 in Form einer Antriebsschwinge 15 rotatorisch oszillierend um die Drehachse 12 angetrieben. Die Antriebsschwinge 15 ist als gerader Metallstab frei von Kröpfungen, Abwinklungen und dergleichen ausgebildet und wird zwischen dem Motorstück und dem Borstenträger 10 im Handteil 1 bzw. im Bürstenrohr 3 von einem Lager 16 gelagert. Das Lager 16 ist als elastischer Lagerstopfen in Form eines Ringes bzw. einer Hülle ausgebildet, der eine Abdichtung zwischen der Antriebsschwinge 15 und der Gehäusewandung des Bürstenrohres 3 bildet. Hierdurch wird Eindringen von Feuchtigkeit in das Innere des Handteilgehäuses 4 verhindert.

Das Lager 16 erlaubt ein mehrachsiges Verschwenken der Antriebsschwinge 15 um Achsen, die in einer zur Längsrichtung der Zahnbürste senkrechten Ebene liegen. Angetrieben wird die

Antriebsschwinge 15 von einem Exzenter 17, der drehfest auf einer Motorwelle 18 sitzt, die sich in Längsrichtung der Zahnbürste erstreckt. Vom Exzenter 17 angetrieben führt die Antriebsschwinge 15 eine doppelkegelförmige Taumel- bzw. Umlaufbewegung aus, wobei die Spitzen der beiden Kegel etwa im Bereich des Lagers 16 liegen. Die beiden Enden der Antriebsschwinge 15 führen eine Kreisbahnbewegung jeweils in einer zur Längsrichtung der Zahnbürste senkrechten Ebene aus.

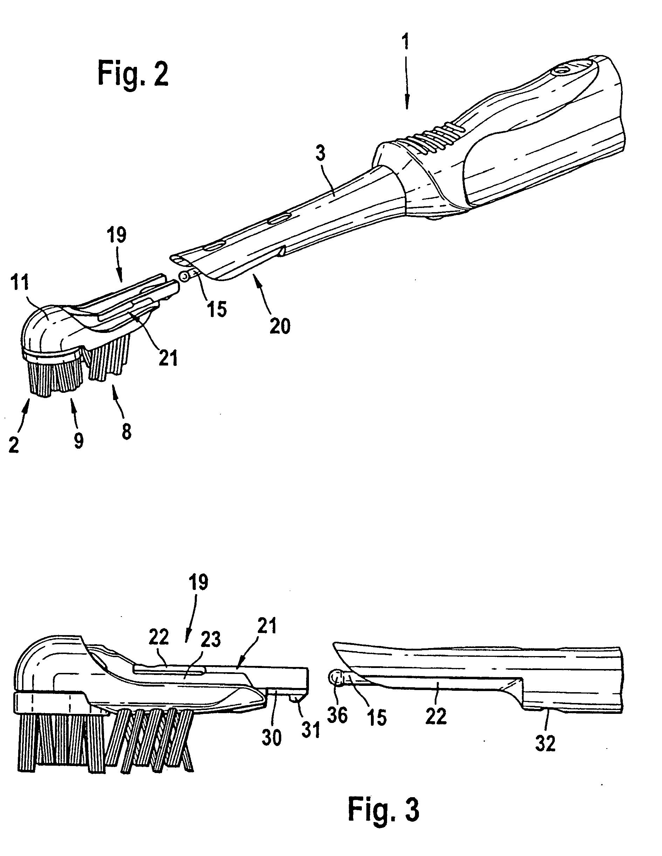

Wie die Figuren 2 und 3 verdeutlichen, ist der Bürstenkopf 2 an dem Bürstenrohr 3 lösbar befestigt. Er kann in besonders einfacher Weise abgezogen bzw. -geschoben werden, wie noch erläutert wird. Der Bürstenkopfträger 11 besitzt einen Befestigungsabschnitt 19, mit dem er auf einen bzw. in einen entsprechenden Befestigungsabschnitt 20 am stirnseitigen Ende des Bürstenrohrs 3 geschoben werden kann. Die beiden Befestigungsabschnitte 19 und 20 sind beide jeweils etwa halbschalenförmig ausgebildet und ergänzen sich passgenau, so dass sie im zusammengeschobenen Zustand ein Hohlprofil bilden, das das Bürstenrohr 3 fortsetzt.

Wie die Figuren 2 bis 4 zeigen, sind an den Befestigungsabschnitten 19 und 20 formschlüssig wirkende Eingriffsmittel vorgesehen, die einerseits Biegekräfte vom Bürstenkopf 2 auf das Bürstenrohr 3 übertragen und andererseits eine Torsion des Bürstenkopfs 2 relativ zum Bürstenrohr 3 verhindern. Insbesondere ist eine Schiebeführung zwischen dem Bürstenkopfträger 11 und dem Bürstenrohr 3 vorgesehen. Wie Figur 3 zeigt, sind an dem Befestigungsabschnitt 19 des Bürstenkopfträgers 11 und dem Befestigungsabschnitt 20 am Bürstenrohr 3 Längsrippen 22 und Längsnuten 23 vorgesehen, die beim Aufschieben des Bürstenkopf 2 ineinander greifen. Der Bürstenkopf 2 kann axial, d.h. in Längsrichtung der Zahnbürste auf das Bürstenrohr 3 aufgeschoben werden. Die axiale Eingriffslänge der Schiebeführung 21 ist ausreichend lang, um eine stabile Verankerung zu erreichen. Sie kann mindestens dem Durchmesser des Bürstenrohrs 3 entsprechen.

Um den Bürstenkopf 2 in axialer Richtung am Handteil 1 bzw. dem Bürstenrohr 3 zu sichern, ist zwischen dem Bürstenkopfträger 11 und dem Handteil 1 eine Verrastvorrichtung vorgesehen, die beim Aufschieben des Bürstenkopfs 2 in axialer Richtung automatisch verrastet und andererseits durch radialen Druck auf das Bürstenrohr 3 bzw. dem Bürstenkopfträger 11 wieder gelöst werden kann. Wie Figur 3 zeigt, ist an dem Bürstenkopfträger 11 des Bürstenkopfs 2 eine zum Handteil 1 hin vorspringende Federzunge 30 angeformt, die sich in etwa axial erstreckt und an ihrem Ende Rastmittel 31 trägt, die als Rasthaken ausgebildet sind. Die Federzunge 30 kann radial, d.h. gemäß Figur 3 nach oben federn, um beim Aufschieben des Bürstenkopfs 2 zurückfedern zu können. Am Bürstenrohr 3 sind zu den Rastmitteln 31 komplementäre Rastmittel vorgesehen. Wenn an der Federzunge 30 ein Rasthaken vorgesehen ist, ist als Rastmittel 32 am Bürstenrohr 3 eine Hinterschneidung, insbesondere ein lochförmiger Durchbruch im Gehäuse vorgesehen. Beim Aufschieben des Bürstenkopfs 2 schiebt sich die Federzunge 30 mit den Rastmitteln 31 über die Wandung des Bürstenrohres 3. Erreicht der Rasthaken 31 den Durchbruch 32, federt die Federzunge 30 radial nach außen zurück und der Rasthaken 31 schnappt ein. Zweckmäßigerweise sind an der Federzunge 30 bzw. dem Rasthaken 31 Auslaufschrägen vorgesehen.

Beim Aufschieben des Bürstenkopfs 2 wird gleichzeitig automatisch der Übertrager 14 mit dem beweglichen Borstenträger 10 gekuppelt. Die Antriebskupplung erfolgt unmittelbar am Borstenträger 10. Wie Figur 4 zeigt, ist an einer dem Handteil 1 zugewandten Mantelfläche des Borstenträgers 10 eine Ausnehmung zur Aufnahme des borstenträgerseitigen Endes des Übertragers 14 vorgesehen. In der gezeichneten Ausführungsform ist die Ausnehmung 33 im Borstenträger 10 ein sich parallel zur Drehachse 12 erstreckender Längsschlitz bzw. eine Längsnut, in der das borstenträgerseitige Ende der Antriebswippe 15 parallel zur Drehachse 12 auf- und abfahren kann. Die schlitzförmige Ausnehmung 33 erweitert sich zum Übertrager 14 hin V-förmig. Die Ränder der Ausnehmung 33 bilden Einfangschrägen 34, die beim Aufschieben des Bürstenkopfs 2 auf das Handteil 1 das Ende der Antriebsschwinge 15 einfangen, so dass diese in die schlitzförmige Ausnehmung 33 einfädelt. Um zu verhindern, dass sich der Borstenträger 10 im demontierten Zustand des Bürstenkopfs 2 zu weit verdreht und somit beim Aufschieben die Antriebsschwinge 15 nicht mehr einfädeln kann, ist der Drehbereich des Borstenträgers 10 um die Drehachse 12 begrenzt. Entsprechende Drehanschläge 35 am Borstenträger 10 und dem Bürstenkopfträger 11 begrenzen die Verdrehbarkeit und sorgen dafür, dass die Ausnehmung 33 stets in Aufschieberichtung ausgerichtet ist.

Das borstenträgerseitige Ende der Antriebswippe 15 ist kugelkalottenförmig ausgebildet. Der Kugelkopf ist passgenau in der Ausnehmung 33 geführt, d.h. die Breite der Ausnehmung 33 quer zur Längsmittelebene der Zahnbürste ist auf den Durchmesser des Kugelkopfs 36 gegebenenfalls mit etwas Spiel abgestimmt. Die von der Ausnehmung 33 und dem Kugelkopf 36 gebildete Antriebskupplung überträgt also Kräfte quer zur Längsachse der Zahnbürste, jedoch keine Kräfte in Längsrichtung der Zahnbürste. Beim doppelkegelförmigen Umlaufen der Antriebswippe 15 gleitet der Kugelkopf 36 an den Wandungen der Ausnehmung 33 ab, da der Übertrager 14 sich nicht um die Längsachse drehen kann. Durch die längsschlitzförmige Ausbildung der Ausnehmung 33 werden Auf- und Abbewegungen des Kugelkopfs 36 kompensiert, d.h. nicht übertragen, da die Antriebskupplung insofern freigängig ist. Quer zur Längsrichtung, d.h. senkrecht zur Zeichenebene der Figur 4 werden die Antriebsbewegungen jedoch übertragen, so dass eine rotatorisch oszillierende Bewegung des Borstenträgers 10 erreicht wird.

Wie Figur 4 zeigt, sitzen die Ränder der Befestigungsabschnitte 19 und 20 des Bürstenkopfs 2 bzw. des Bürstenrohrs 3 im zusammengebauten Zustand passgenau aufeinander, wobei die Ränder eine übereinanderschiebbare, abgestufte Kontur 37 haben können.

Die Borstenfelder 8 und 9 des Bürstenkopfs 2 zeichnen sich durch die besondere Konfiguration der darauf angeordneten Borstenbüschel und Borsten aus und werden nachfolgend anhand der Figuren näher erläutert:

Das rotatorisch oszillierend antreibbare Borstenfeld 9 besitzt einen insgesamt etwa kreiszylindrischen Umriss und wird von einer Mehrzahl von Borstenbüscheln verschiedener Neigung, verschiedener Höhe und verschiedenen Querschnitts gebildet.

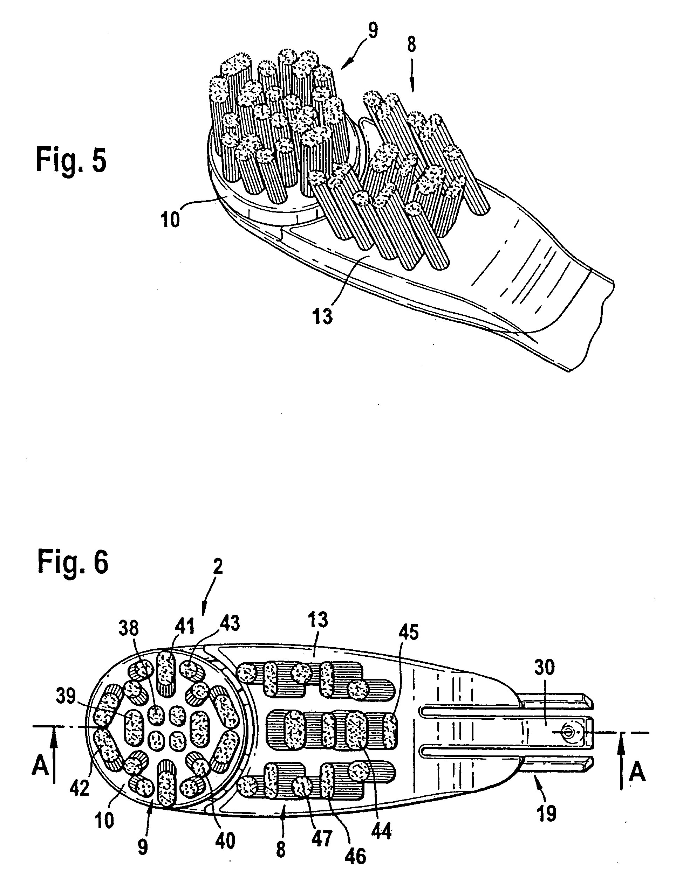

Wie Figur 6 zeigt, sind zentrale erste Borstenbüschel 38 mittig um die Drehachse 12 herum angeordnet. Sie erstrecken sich senkrecht zu der von dem Borstenträger 10 definierten Ebene und besitzen einen etwa kreisrunden bzw. leicht ovalen Querschnitt. Von den ersten Borstenbüscheln 38 sind vier an der Zahl vorgesehen. Sie liegen mittig um die Drehachse 12 herum. Benachbart zu dem ersten Borstenbüschel 38 sind zweite Borstenbüschel 39, die bei unverdrehter Anordnung des Borstenträgers 10 auf der Längsmittelachse der Zahnbürste liegen und in Längsrichtung vor bzw. hinter dem ersten Borstenbüschel 38 liegen. Wie Figur 6 zeigt, besitzen die zweiten Borstenbüschel 39 einen ovalen Querschnitt mit einer sich quer zur Längsachse der Zahnbürste erstreckenden Längsachse. Die zweiten Borstenbüschel 39 sind ebenfalls senkrecht zu der von dem Borstenträger 10 definierten Ebene angeordnet. Ihr Abstand von der Drehachse 12 ist größer als der der ersten Borstenbüschel 38. Das Verhältnis von Konturlänge zu Konturbreite beträgt etwa, wie Figur 6 zeigt, zwei.

Die weiteren Borstenbüschel des angetriebenen Borstenfeldes sind geneigt angeordnet, und zwar in unterschiedlicher Ausrichtung. Die vierten Borstenbüschel 40, die radial ausserhalb der ersten Borstenbüschel 38 sozusagen auf einem zweiten Borstenbüschelring angeordnet sind, besitzen einen etwa kreisförmigen Querschnitt und sind radial nach außen geneigt, d.h. ihre freien Arbeitsenden sind von der Drehachse des Borstenträgers weiter entfernt als ihre am Borstenträger 10 befestigten Befestigungsabschnitte. Der Neigungswinkel ist spitz und beträgt weniger als 20°.

Die dritten Borstenbüschel 41 sind ebenfalls radial nach außen geneigt angeordnet. Sie haben jedoch eine ovale Kontur bzw. einen länglichen Querschnitt, wobei die Längsachse des Querschnitts radial ausgerichtet ist. Der Querschnitt der dritten Borstenbüschel ist etwa zweimal bis dreimal, bevorzugt zweimal, so lang wie breit. Die dritten Borstenbüschel 41 sitzen radial außerhalb der ersten Borstenbüschel 38 benachbart zu diesen auf einer quer zur Zahnbürstenlängsrichtung verlaufenden Symmetrieachse des Borstenfeldes.

Die übrigen Borstenbüschel des Borstenfeldes 9 sind ebenfalls geneigt angeordnet, jedoch sind sie in Umfangsrichtung um die Drehachse 12 herum geneigt. Sie bilden den äußeren Rand bzw. Kranz des Borstenfeldes 9.

Die fünften Borstenbüschel 42 besitzen eine ovale Kontur bzw. einen länglichen Querschnitt, der etwa tangential zum Rand des Borstenträgers 10 ausgerichtet ist. Im Querschnitt sind die Borstenbüschel 42 etwa doppelt bis dreimal, bevorzugt zweimal, so lang wie breit. Wie Figur 6 zeigt, sind die fünften Borstenbüschel 42 paarweise im Bereich der Längsachse der Zahnbürste angeordnet, wenn das Borstenfeld 9 unverdreht ist. Sie sind paarweise gegeneinander geneigt, so dass ihre freien Arbeitsenden näher zusammen stehen als ihre im Borstenträger 10 verankerten Befestigungsabschnitte.

Schließlich sind sechste Borstenbüschel 43 vorgesehen, die ebenfalls am äußeren Rand des Borstenfeldes liegen und in Umfangsrichtung um die Drehachse 12 geneigt sind. Sie besitzen jedoch einen etwa kreisförmigen Querschnitt und sind paarweise auf beiden Seiten der dritten Borstenbüschel 41 angeordnet und ebenfalls gegensinnig auf diese zugeneigt. Die Neigungswinkel der in Umfangsrichtung geneigten, außen liegenden Borstenbüschel 43 und 42 sind ebenfalls spitz und betragen vorzugsweise weniger als 20° zur Senkrechten durch die vom Borstenträger 10 definierten Ebene. Die Querschnittsfläche der länglichen Borstenbüschel (39, 41, 42) ist bevorzugt etwa doppelt so groß wie die der etwa kreisförmigen Borstenbüschel (38, 40, 43).

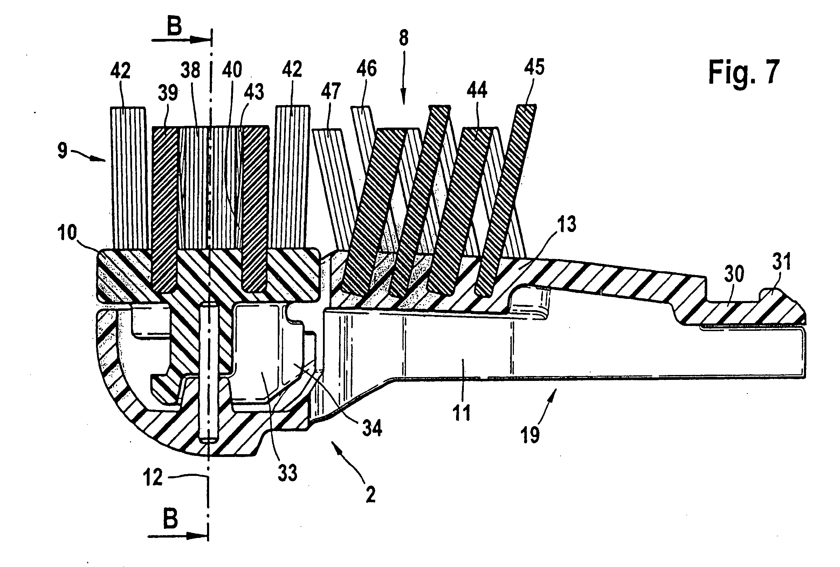

Wie Figur 7 zeigt, besitzen die auf dem bewegbaren Borstenträger 10 angeordneten Borstenbüschel zwei Längen. Die in Längsrichtung ganz vorne und hinten liegenden, außen angeordneten fünften Borstenbüschel 42, deren freie Enden alle in einer Ebene liegen, sind länger als die restlichen Borstenbüschel. Die freien Enden der fünften Borstenbüschel 42 definieren eine Ebene. Der Höhenunterschied zwischen den Borstenbüscheln beträgt im Bereich von 0,5 mm bis 2,5 mm, vorzugsweise etwa 1,0 mm bis 1,5 mm. In der gezeichneten Ausführung beträgt er 1,2 mm.

Die Borstenbüschel des zweiten, festen Borstenfeldes 8 besitzen ebenfalls unterschiedliche Querschnitte hinsichtlich Kontur und Fläche und sind darüber hinaus ebenfalls unterschiedlich geneigt angeordnet. Es sind auch Borstenbüschel unterschiedlicher Länge vorgesehen, wie noch beschrieben wird.

Wie Figur 6 zeigt, sind im feststehenden Borstenfeld grob gesprochen drei benachbarte Reihen von Borstenbüscheln vorgesehen, die sich alle in Längsrichtung der Zahnbürste erstrecken. Die mittlere Reihe liegt im wesentlichen auf der Längsmittelachse, während die beiden äußeren Reihen beidseitig hierzu mit Abstand angeordnet sind.

In der mittleren Borstenreihe sind alle Borstenbüschel zum Handteil 1 hin geneigt angeordnet. Alle Borstenbüschel besitzen einen länglichen bzw. ovalen Querschnitt, jedoch unterschiedliche Querschnittsflächen. Erste Borstenbüschel 44 des festen Borstenfeldes 8 besitzen einen ovalen Querschnitt, dessen Längsachse ca. doppelt so lang ist wie seine Querachse. Die ersten Borstenbüschel 44 alternieren in der mittleren Reihe mit nachfolgend als vierten Borstenbüscheln bezeichneten Borstenbüscheln 45, die ebenfalls zum Handteil hin nach hinten geneigt sind. Die vierten Borstenbüschel 45 besitzen ebenfalls einen ovalen Querschnitt, sind jedoch wesentlich schlanker ausgebildet und besitzen eine kleinere Querschnittsfläche als die ersten Borstenbüschel. Entsprechend der gezeichneten Ausführung ist der länglich Querschnitt etwa - grob gesprochen - dreimal so lang wie breit. Die Länge des ovalen Querschnitts ist dabei geringfügig kleiner als die Länge des Querschnitts der ersten Borstenbüschel 44.

Die beiden äußeren Reihen der Borstenbüschel des festen Borstenfeldes 8 bestehen aus zweiten und dritten Borstenbüscheln. Zweite Borstenbüschel 46 besitzen einen ovalen Querschnitt mit relativ schlanker Kontur. Die Längsachse der länglichen Querschnittskontur beträgt etwa das dreifache der Breite der Querschnittskontur. Die dritten Borstenbüschel 47 besitzen einen etwa kreisrunden Querschnitt, wobei der Durchmesser des Querschnitts etwas mehr als die Hälfte der Längsachse des Querschnitts der zweiten Borstenbüschel 46 beträgt. Die Borstenbüschel 44 haben bevorzugt eine Querschnittsfläche, die etwa doppelt so gross wie die der Borstenbüschel 47 ist. Die Querschnittsflächen der Borstenbüschel 45 und 46 sind etwa gleich gross. Wie Figur 6 zeigt, sind die dritten Borstenbüschel 47 von der Längsmittelachse des Bürstenkopfs 2 unterschiedlich beabstandet. Der Abstand zur Längsmittelachse nimmt zum Handteil 1 hin ab. Die dritten Borstenbüschel 47 sind jedoch noch soweit in Reihe hintereinander, dass ihre Kontur etwa hinter der Kontur der viel breiteren zweiten Borstenbüschel 46 liegt. Die zweiten und dritten Borstenbüschel 46 und 47 sind jeweils in einem spitzen Winkel nach vorne, d.h. zum antreibbaren Borstenfeld 9 hin geneigt, und zwar in einem spitzen Winkel, der vorzugsweise 12° bis 15° betragen kann. Sämtliche Borstenbüschel des festen Borstenfeldes 8 sind vorzugsweise in der Längsmittelebene des Bürstenkopfs 2 bzw. dazu parallelen Ebenen geneigt. Demgegenüber sind sämtliche Borstenbüschel des rotierenden Borstenfeldes 9 unterschiedlich geneigt bzw. in einer anderen Ausrichtung angeordnet.

Die Borstenbüschel des festen Borstenfeldes 8 definieren zwei Arbeitsebenen, wie Figur 7 zeigt. Die kreisrunden dritten Borstenbüschel 47 in den äußeren Reihen sowie die dickeren, insbesondere ovalen ersten Borstenbüschel 44 in der mittleren Reihe sind kürzer ausgebildet und definieren mit ihren freien Arbeitsenden eine tiefere Ebene, die mit der Ebene übereinstimmt, die von den ersten, zweiten, dritten und vierten sowie sechsten Borstenbüscheln des rotierenden Borstenfeldes 9 definiert wird. Eine höhere, zweite Ebene wird hingegen von den längeren vierten Borstenbüscheln 45 in der mittleren Reihe und den zweiten Borstenbüscheln 46 in den beiden äußeren Reihen definiert. Diese höhere Ebene stimmt mit der Ebene überein, die von den längeren fünften Borstenbüscheln des beweglichen Borstenfeldes 9 definiert wird. Im festen Borstenfeld 8 gilt damit, dass die schlankeren ovalen Borstenbüschel eine größere Länge besitzen als die dickeren Borstenbüschel.

Wie Figur 7 ferner zeigt, fällt die Oberseite des festen Borstenträgers 13 zum Handteil 1 hin ab. Dementsprechend nimmt die Länge der Borstenbüschel im festen Borstenfeld 8 zum Handteil 1 hin zu. Von der Längsrichtung der Zahnbürste zu den parallelen äusseren Reihen nimmt die Länge der Borsten um ca. 0,5 bis 1,0 mm, bevorzugt 0,5 mm, zu.

Im Gegensatz zum antreibbaren Borstenfeld 9 besitzt das feste Borstenfeld 8 keine kreisrunde Kontur, sondern eine insgesamt langgestreckte Kontur, die an ihrem dem rotierenden Borstenfeld 9 zugewandten Ende dieses umgibt.

Es versteht sich, dass der Bürstenkopf 2, insbesondere der feste Borstenträger 13 sowie der antreibbare Borstenträger 10 aus Kunststoff gegossen sein können. Vorzugsweise bestehen sie aus POM, um eine geringe Materialstärke zuzulassen. Die Wandstärke kann im Bereich von 2,5 mm bis 3,5 mm liegen.

Die Länge der Borsten bzw. Filamente kann an diverse Randbedingungen angepasst werden. Eine bevorzugte Ausgestaltung der Erfindung liegt darin, dass die Länge der Borsten, und zwar der längeren Borsten, die die höhere Ebene definieren, im Bereich von 7,5 mm bis 9,0 mm, vorzugsweise etwa 8,0 mm bis 8,5 mm und insbesondere etwa 8,3 mm beträgt.

Die Borstenbüschel sind vorzugsweise im Ankerverfahren mittels eines Ankerplättchens in den Borstenträgern befestigt, wobei die Borstenbüschel mit länglichem oder ovalem, von der Kreiskontur abweichendem Querschnitt aus mehreren Borstenbüscheln zusammengesetzt sind, die durch Trennwände in der Borstenbüschelausnehmung voneinander getrennt sind, wie dies an sich aus der DE 10015062 A1 bekannt ist, auf die insoweit Bezug genommen wird.

Bei den schlanken Borstenbüscheln mit länglichem Querschnitt, d.h. bei den zweiten Borstenbüscheln 46 und den vierten Borstenbüscheln 45 am festen Borstenfeld 8 ist vorzugsweise vorgesehen, dass sich die Ankerplättchen in Längsrichtung des Querschnitts erstrecken. Um Risse im Borstenträger zu vermeiden, sind dabei diese schlanken Borstenbüschel mit ihren Längsachsen leicht versetzt angeordnet, so dass die Ankerplättchen nicht entlang einer Linie angeordnet werden.

Vorzugsweise ist der feste Borstenträger 13 auch in einer Richtung quer zur Bürstenkopflängsachse uneben ausgebildet. Insbesondere kann er zur Außenseite hin abfallen, so dass die außen liegenden Borsten eine größere Länge haben als weiter innen liegende Borsten und damit biegsamer werden. Die Oberfläche des festen Borstenträgers 13 kann quer zur Längsachse domförmig bzw. tonnenförmig gewölbt sein. Die dreidimensional gewölbte Struktur des festen Borstenträgers 13 sowie die Verwendung von POM erlaubt es, den Bürstenkopf äußerst kompakt auszubilden, so dass eine bessere Putzleistung erreicht werden kann.

Die Borsten der Borstenbüschel 47, 46 haben bevorzugt einen Durchmesser von (7±1) x 10⁻³ inch, während der Durchmesser der Borsten der Borstenbüschel 44, 45 bevorzugt (6±1) x 10⁻³ inch beträgt.

## Patentansprüche

1. Zahnbürstenkopf für eine elektrische Zahnbürste, mit einem Bürstenkopfträger (11), an dem ein motorisch antreibbarer Borstenträger (10) mit einem Borstenfeld (9) beweglich, insbesondere rotatorisch oszillierbar, gelagert ist, wobei am Borstenträger (10) mehrere Gruppen (38-43) von Borstenbüscheln befestigt sind, die in verschiedene Richtungen geneigt angeordnet sind, wobei eine dritte Gruppe von Borstenbüscheln (41) am beweglichen Borstenträger in einem spitzen Winkel zur Bewegungsachse (12) radial nach außen geneigt angeordnet ist und wobei eine fünfte Gruppe von Borstenbüscheln (42) am beweglichen Borstenträger (10) zur Bewegungsachse (12) in einem spitzen Winkel in Umlaufrichtung um die Bewegungsachse (12) geneigt angeordnet ist.

2. Zahnbürstenkopf nach dem vorhergehenden Anspruch, wobei die in verschiedene Richtungen geneigten Gruppen (38-43) von Borstenbüscheln verschiedene Querschnitte besitzen.

3. Zahnbürstenkopf nach einem der vorhergehenden Ansprüche, wobei am beweglichen Borstenträger (10) Borstenbüschel (39; 41; 42; 44; 45; 46) mit einem von der Kreisform abweichenden Querschnitt, insbesondere einem länglichen, ovalen bzw. rechteckigen Querschnitt, vorgesehen sind.

4. Zahnbürstenkopf nach einem der vorhergehenden Ansprüche, wobei am beweglichen Borstenträger (10) Borstenbüschel vorgesehen sind, deren freie Arbeitsenden in verschiedenen Höhen über dem Borstenträger (10; 13) liegen.

5. Zahnbürstenkopf nach einem der vorhergehenden Ansprüche, wobei eine erste Gruppe von Borstenbüscheln (38) am beweglichen Borstenträger (10) sich parallel zur Bewegungsachse (12) des Borstenträgers erstreckt, vorzugsweise einen kreisrunden Querschnitt besitzt.

6. Zahnbürstenkopf nach einem der vorhergehenden Ansprüche, wobei eine zweite Gruppe von Borstenbüscheln (39) am beweglichen Borstenträger (10) sich parallel zur Bewegungsachse (12) des Borstenträgers erstreckt, vorzugsweise einen ovalen Querschnitt aufweist.

7. Zahnbürstenkopf nach einem der vorhergehenden Ansprüche, wobei die dritte Gruppe von Borstenbüscheln (41) am beweglichen Borstenträger einen ovalen Querschnitt mit radial verlaufender Längsachse besitzt.

8. Zahnbürstenkopf nach einem der vorhergehenden Ansprüche, wobei eine vierte Gruppe von Borstenbüscheln (40) am beweglichen Borstenträger (10) zur Bewegungsachse (12) in einem spitzen Winkel geneigt, insbesondere radial nach außen geneigt, angeordnet ist, vorzugsweise einen kreisförmigen Querschnitt besitzt.

9. Zahnbürstenkopf nach einem der vorhergehenden Ansprüche, wobei die fünfte Gruppe von Borstenbüscheln (42) einen ovalen Querschnitt mit in Umlaufrichtung ausgerichteter Längsachse aufweist, wobei vorzugsweise benachbarte Borstenbüschel (42) gegensinnig geneigt sind.

10. Zahnbürstenkopf nach einem der vorhergehenden Ansprüche, wobei eine sechste Gruppe von Borstenbüscheln (43) am beweglichen Borstenträger zur Bewegungsachse (12) in einem spitzen Winkel geneigt, insbesondere in Umlaufrichtung um die Bewegungsachse (12) geneigt, angeordnet ist und vorzugsweise einen runden Querschnitt aufweist.

11. Zahnbürstenkopf nach einem der vorhergehenden Ansprüche 5 bis 10, wobei die erste Gruppe von Borstenbüscheln (38) im Zentrum des Borstenfeldes (9) angeordnet ist.

12. Zahnbürstenkopf nach einem der vorhergehenden Ansprüche 6 bis 11, wobei die zweite Gruppe von Borstenbüscheln (39) benachbart und radial außerhalb der ersten Gruppe von Borstenbüscheln (38) angeordnet ist und vorzugsweise in Längsrichtung des Bürstenkopfs vor und hinter der ersten Gruppe liegt.

13. Zahnbürstenkopf nach einem der vorhergehenden Ansprüche 5 bis 12, wobei die dritte Gruppe von Borstenbüscheln (41) benachbart und radial außerhalb der ersten Gruppe von Borstenbüscheln (38) angeordnet ist und vorzugsweise in Längsrichtung des Bürstenkopfs rechts und links von der ersten Gruppe liegt.

14. Zahnbürstenkopf nach einem der vorhergehenden Ansprüche 8 bis 13, wobei die vierte Gruppe von Borstenbüscheln (40) radial außen und benachbart zur ersten Gruppe von Borstenbüscheln (38), vorzugsweise in Umfangsrichtung zwischen der zweiten und dritten Gruppe von Borstenbüscheln (39; 41) angeordnet ist.

15. Zahnbürstenkopf nach einem der vorhergehenden Ansprüche 8 bis 14, wobei die fünfte Gruppe von Borstenbüscheln (42) radial außen, insbesondere radial außerhalb der zweiten und/oder vierten Gruppe von Borstenbüscheln (39; 40) angeordnet ist, vorzugsweise in Längsrichtung des Bürstenkopfs vor und hinter der ersten und/oder zweiten Gruppe von Borstenbüscheln (38; 39) liegt.

16. Zahnbürstenkopf nach einem der vorhergehenden Ansprüche 10 bis 15, wobei die sechste Gruppe von Borstenbüscheln (43) radial außen, insbesondere radial außerhalb der zweiten und/oder vierten Gruppe von Borstenbüscheln (39; 40) angeordnet ist, und vorzugsweise in Längsrichtung rechts und links von der ersten und/oder zweiten Gruppe von Borstenbüscheln (38; 39) liegt.

17. Zahnbürstenkopf nach einem der vorhergehenden Ansprüche, wobei eine erste Ebene von radial außen liegenden und/oder in Längsrichtung des Bürstenkopfs vorne und hinten liegenden Borstenbüscheln (42) und eine zweite Ebene von radial innen liegenden und/oder in Längsrichtung rechts und links liegenden Borstenbüscheln (38; 39; 40; 41) definiert wird, wobei vorzugsweise die erste Ebene höher über dem Borstenträger liegt als die zweite Ebene, insbesondere mit einer Höhendifferenz von. 0,5 bis 2,5 mm, bevorzugt 1,2 mm.

18. Zahnbürstenkopf nach einem der vorhergehenden Ansprüche, wobei Borstenbüschel mit unterschiedlichen Borstentypen, insbesondere unterschiedlichen Borstendurchmessem vorgesehen sind, wobei in Längsrichtung des Bürstenkopfs weiter außen liegende Borstenbüschel überwiegend dickere Borsten aufweisen als weiter innen liegende Borstenbüschel, wobei vorzugsweise die Borsten aus Nylon bestehen.

## Claims

1. Toothbrush head for an electric toothbrush with a brush head carrier (11) on which a motor drivable bristle carrier (10) with a movable bristle field (which in particular may be rotationally oscillated) is supported, wherein multiple groups (38-43) of bristle tufts that are arranged to be inclined in different directions are affixed on the bristle carrier (10); wherein a third group of bristle tufts (41) on the movable bristle carrier is arranged to be inclined radially outward at an acute angle relative to the movement axis (12), and wherein a fifth group of bristle tufts (42) on the movable bristle carrier (10) is arranged to be inclined at an acute angle in the circumferential direction around the movement axis (12).

2. Toothbrush head according to the preceding Claim, wherein the groups (38-43) of bristle tufts that are inclined in different directions have different cross sections.

3. Toothbrush head according to any of the preceding Claims, wherein bristle tufts (39; 41; 42; 44; 45; 46) with a cross section deviating from a circular shape - in particular an oblong, oval or rectangular cross section - are provided on the movable bristle carrier (10).

4. Toothbrush head according to any of the preceding Claims, wherein bristle tufts whose free working ends are at various heights above the bristle carrier (10; 13) are provided on the movable bristle carrier (10).

5. Toothbrush head according to any of the preceding Claims, wherein a first group of bristle tufts (38) on the movable bristle carrier (10) extending parallel to the movement axis (12) of the bristle carrier preferably has a circular cross section.

6. Toothbrush head according to any of the preceding Claims, wherein a second group of bristle tufts (39) on the movable bristle carrier (10) extending parallel to the movement axis (12) of the bristle carrier preferably has an oval cross section.

7. Toothbrush head according to any of the preceding Claims, wherein the third group of bristle tufts (41) on the movable bristle carrier has an oval cross section with longitudinal axis extending radially.

8. Toothbrush head according to any of the preceding Claims, wherein a fourth group of bristle tufts (40) on the movable bristle carrier (10) is arranged to be inclined at an acute angle relative to the movement axis (12), in particular to be inclined radially outwardly, and preferably has a circular cross section.

9. Toothbrush head according to any of the preceding Claims, wherein the fifth group of bristle tufts (42) has an oval cross section with longitudinal axis aligned in the circumferential direction, wherein adjacent bristle tufts (42) are preferably inclined in the opposite direction to one another.

10. Toothbrush head according to any of the preceding Claims, wherein a sixth group of bristle tufts (43) on the movable bristle carrier is arranged to be inclined at an acute angle relative to the movement axis (12) - in particular to be inclined in the circumferential direction around the movement axis (12) - and preferably has a round cross section.

11. Toothbrush head according to any of the preceding Claims 5 through 10, wherein the first group of bristle tufts (38) is arranged in the center of the bristle field (9).

12. Toothbrush head according to any of the preceding Claims 6 through 11, wherein the second group of bristle tufts (39) is arranged adjacent to and radially outside of the first group of bristle tufts (38), and preferably lies ahead of and behind the first group in the longitudinal direction of the brush head.

13. Toothbrush head according to any of the preceding Claims 5 through 12, wherein the third group of bristle tufts (41) is arranged adjacent to and radially outside of the first group of bristle tufts (38), and preferably to the right and left of the first group with regard to the longitudinal direction of the brush head.

14. Toothbrush head according to the preceding Claims 8 through 13, wherein the fourth group of bristle tufts (40) is arranged radially outward of and adjacent to the first group of bristle tufts (38) preferably between the second and third group of bristle tufts (39; 41) in the circumferential direction.

15. Toothbrush head according to any of the preceding Claims 8 through 14, wherein the fifth group of bristle tufts (42) is arranged radially outwardly, in particular arranged radially outside of the second and/or fourth group of bristle tufts (39; 40), and preferably lies ahead of and behind the first and/or second group of bristle tufts (38; 39) in the longitudinal direction of the brush head.

16. Toothbrush head according to any of the preceding Claims 10 through 15, wherein the sixth group of bristle tufts (43) is arranged radially outwardly, in particular arranged radially outside of the second and/or fourth group of bristle tufts (39; 40), and preferably lies to the right and left of the first and/or second group of bristle tufts (38;39) with respect to the longitudinal direction.

17. Toothbrush head according to any of the preceding Claims, wherein a first plane is defined by radially outlying bristle tufts (42) and/or bristle tufts (42) situated forwardly and rearwardly in the longitudinal direction of the brush head, and a second plane is defined by radially inwardly disposed bristle tufts (38; 39; 40; 41) and/or bristle tufts (38; 39; 40; 41) situated to the right and left with respect to the longitudinal direction, wherein the first plane is preferably situated higher above the bristle carrier than the second plane, in particular with a height difference of 0.5 to 2.5 mm (preferably 1.2 mm).

18. Toothbrush head according to any of the preceding Claims, wherein bristle tufts with different bristle types (in particular different bristle diameters) are provided, wherein further outlying bristle tufts in the longitudinal direction of the brush head predominantly have thicker bristles than further inwardly disposed bristle tufts, wherein the bristles are preferably comprised of nylon.

## Revendications

1. Tête de brosse à dents pour une brosse à dents électrique, dotée d'un support (11) de tête de brosse, sur lequel est logé, de manière mobile, en particulier de manière oscillante rotative, un support (10) à poils, doté d'un champ (9) à poils, pouvant être entraîné par un moteur, plusieurs groupes (38-43) de touffes de poils étant fixés sur le support (10) à poils, lesdites touffes étant disposées de manière inclinée dans différentes directions, un troisième groupe de touffes (41) de poils étant disposé sur le support à poils mobile en étant incliné radialement vers l'extérieur sous un angle aigu par rapport à l'axe de déplacement (12) et un cinquième groupe de touffes (42) de poils étant disposé sur le support (10) à poils mobile en étant incliné dans la direction périphérique autour de l'axe de déplacement sous un angle aigu par rapport à l'axe de déplacement (12).

2. Tête de brosse à dents selon la revendication précédente, les groupes (38-43) de touffes de poils inclinés dans différentes directions présentant des sections transversales différentes.

3. Tête de brosse à dents selon l'une quelconque des revendications précédentes, des touffes de poils (39 ; 41 ; 42 ; 44 ; 45 ; 46), présentant une section transversale différente d'un cercle, en particulier une section allongée, ovale ou rectangulaire, étant disposées sur le support (10) à poils mobile.

4. Tête de brosse à dents selon l'une quelconque des revendications précédentes, des touffes de poils, dont les extrémités de travail libres se situent à différentes hauteurs au-dessus du support (10 ; 13) à poils, étant disposées sur le support (10) à poils mobile.

5. Tête de brosse à dents selon l'une quelconque des revendications précédentes, un premier groupe de touffes (38) de poils s'étendant sur le support (10) à poils mobile, parallèlement à l'axe de déplacement (12) du support à poils, et présentant de préférence une section ronde.

6. Tête de brosse à dents selon l'une quelconque des revendications précédentes, un deuxième groupe de touffes (39) de poils s'étendant sur le support (10) à poils mobile, parallèlement à l'axe de déplacement (12) du support à poils, et présentant de préférence une section ovale.

7. Tête de brosse à dents selon l'une quelconque des revendications précédentes, le troisième groupe de touffes (41) de poils sur le support à poils mobile présentant une section ovale dotée d'un axe longitudinal s'étendant radialement.

8. Tête de brosse à dents selon l'une quelconque des revendications précédentes, un quatrième groupe de touffes (40) de poils étant disposé sur le support (10) à poils mobile de manière inclinée, en particulier inclinée radialement vers l'extérieur, sous un angle aigu par rapport à l'axe de déplacement (12), et présentant de préférence une section circulaire.

9. Tête de brosse à dents selon l'une quelconque des revendications précédentes, le cinquième groupe de touffes (42) de poils présentant une section ovale dotée d'un axe longitudinal orienté dans la direction périphérique, des touffes (42) de poils adjacentes étant de préférence inclinées de manière opposée.

10. Tête de brosse à dents selon l'une quelconque des revendications précédentes, un sixième groupe de touffes (43) de poils étant disposé sur le support à poils mobile de manière inclinée, en particulier inclinée dans la direction périphérique autour de l'axe de déplacement (12), par rapport à l'axe de déplacement (12), sous un angle aigu, et présentant de préférence une section ronde.

11. Tête de brosse à dents selon l'une quelconque des revendications précédentes 5 à 10, le premier groupe de touffes (38) de poils étant disposé au centre du champ (9) à poils.

12. Tête de brosse à dents selon l'une quelconque des revendications précédentes 6 à 11, le deuxième groupe de touffes (39) de poils étant disposé de manière adjacente au et radialement à l'extérieur du premier groupe de touffes (38) de poils et se situant de préférence, dans la direction longitudinale de la tête de brosse, devant et derrière le premier groupe.

13. Tête de brosse à dents selon l'une quelconque des revendications 5 à 12, le troisième groupe de touffes (41) de poils étant disposé de manière adjacente à et radialement à l'extérieur du premier groupe de touffes (38) de poils et se situant de préférence, dans la direction longitudinale de la tête de brosse, à droite et à gauche du premier groupe.

14. Tête de brosse à dents selon l'une quelconque des revendications précédentes 8 à 13, le quatrième groupe de touffes (40) de poils se situant radialement vers l'extérieur et de manière adjacente au premier groupe de touffes (38) de poils, de préférence, dans la direction périphérique, entre le deuxième et le troisième groupe de touffes (39 ; 41) de poils.

15. Tête de brosse à dents selon l'une quelconque des revendications précédentes 8 à 14, le cinquième groupe de touffes (42) de poils étant disposé radialement à l'extérieur, en particulier radialement à l'extérieur du deuxième et/ou du quatrième groupe de touffes (39 ; 40) de poils et se situant de préférence, dans la direction longitudinale de la tête de brosse, devant et derrière le premier et/ou le deuxième groupe de touffes (38 ;39) de poils.

16. Tête de brosse à dents selon l'une quelconque des revendications précédentes 10 à 15, le sixième groupe de touffes (43) de poils étant disposé radialement à l'extérieur, en particulier radialement à l'extérieur du deuxième et/ou du quatrième groupe de touffes (39 ; 40) de poils et se situant de préférence, dans la direction longitudinale, à droite et à gauche du premier et/ou du deuxième groupe de touffes (38 ;39) de poils.

17. Tête de brosse à dents selon l'une quelconque des revendications précédentes, un premier plan étant défini par des touffes (42) de poils se situant radialement à l'extérieur et/ou devant et derrière dans la direction longitudinale de la tête de brosse, et un deuxième plan étant défini par des touffes (38 ; 39 ; 40 ; 41) de poils se situant radialement à l'intérieur et/ou à droite et à gauche dans la direction longitudinale, le premier plan étant de préférence situé à une hauteur plus élevée au-dessus du support à poils que le deuxième plan, en présentant en particulier une différence de hauteur de 0,5 à 2,5 mm, de préférence de 1,2 mm.

18. Tête de brosse à dents selon l'une quelconque des revendications précédentes, des touffes de poils présentant des types de poils différents, présentant en particulier des diamètres de poils différents, étant prévues, les touffes de poils situées plus à l'extérieur dans la direction longitudinale présentant principalement des poils plus épais que des touffes de poils se situant plus à l'intérieur, les poils étant de préférence en nylon.
